# EUROPÄISCHE PATENTSCHRIFT

(11) **EP 1 831 511 B1**
(45) Veröffentlichungstag und Bekanntmachung des Hinweises auf die Patenterteilung: **08.10.2008**
(21) Anmeldenummer: 05850344.2
(22) Anmeldetag: 23.12.2005
(51) Int. Cl.: F01N 3/28

(54) **WABENKÖRPER MIT ZUMINDEST TEILWEISE KERAMISCHER WABENSTRUKTUR UND AUFNAHME FÜR MESSFÜHLER UND VERFAHREN ZUR HERSTELLUNG EINES SOLCHEN WABENKÖRPERS**
HONEYCOMB ELEMENT COMPRISING AN AT LEAST PARTLY CERAMIC HONEYCOMB STRUCTURE AND A RECEIVING DEVICE FOR A SENSOR, AND METHOD FOR THE PRODUCTION OF SUCH A HONEYCOMB ELEMENT
CORPS ALVEOLAIRE COMPRENANT AU MOINS UNE STRUCTURE ALVEOLAIRE PARTIELLEMENT CERAMIQUE ET UN ELEMENT DE RECEPTION POUR UN CAPTEUR, ET PROCEDE DE PRODUCTION DE CE CORPS ALVEOLAIRE

(30) Priorität: 30.12.2004 DE 102004063546
(43) Veröffentlichungstag der Anmeldung: 12.09.2007
(73) Patentinhaber: Emitec Gesellschaft für Emissionstechnologie mbH, 53797 Lohmar (DE)
(72) Erfinder: BRÜCK, Rolf, 51429 Bergisch Gladbach (DE)
(74) Vertreter: Rössler, Matthias
(86) Internationale Anmeldenummer: PCT/EP2005/013965
(87) Internationale Veröffentlichungsnummer: WO 2006/072414

(56) Entgegenhaltungen:
- WO-A-03/074925
- DE-U1- 8 816 154
- PATENT ABSTRACTS OF JAPAN Bd. 2002, Nr. 10, 10. Oktober 2002 (2002-10-10) & JP 2002 161740 A (TOKYO ROKI CO LTD), 7. Juni 2002 (2002-06-07)

## Beschreibung

Gegenstand der vorliegenden Erfindung ist ein Wabenkörper mit einer zumindest teilweise keramischen für ein Fluid durchströmbaren Wabenstruktur, die Hohlräume aufweist und in einem Mantelrohr ausgebildet ist. Ein solcher Wabenkörper wird bevorzugt im Abgassystem eines Kraftfahrzeugs eingesetzt, insbesondere als Katalysatorträgerkörper oder Filterkörper. Weiterhin umfasst die Erfindung auch ein Verfahren zur Herstellung eines entsprechenden Wabenkörpers.

Wabenkörper werden oftmals mit einer metallischen oder auch keramischen Wabenstruktur ausgebildet. Diese Wabenkörper werden in Abgassystemen von Kraftfahrzeugen, wie beispielsweise Automobilen, eingesetzt, insbesondere auch als Katalysatorträgerkörper oder Filterkörper. Weltweit gibt es eine Vielzahl von Ländern, die Grenzwerte für bestimmte Komponenten des Abgases von Automobilen festsetzen. Diese Grenzwerte sind regelmäßig nur dadurch einzuhalten, dass eine katalytische Aufbereitung des Abgases der Verbrennungsmotoren durchgeführt wird. Die immer häufiger geforderten sehr hohen Umsetzungsraten für bestimmte Komponenten des Abgases können nur dadurch eingehalten werden, dass dem Abgas eine erhöhte Reaktionsoberfläche zur Verfügung gestellt wird. Um keine zu großen Wabenkörper einbauen zu müssen, geht daher der Trend hin zu Wabenkörpern mit einer sehr hohen Zelldichte, die also eine große Anzahl von Hohlräumen oder Hohlräumen pro Querschnittseinheitsfläche aufweisen. Dies bedingt aber, dass die Wände, welche die Hohlräume begrenzen, im Vergleich zu Wabenkörpern mit einer geringeren Zelldichte deutlich dünner ausgebildet werden. Gleichzeitig benötigen viele Abgassysteme zur Einhaltung der gesetzlich vorgegebenen Grenzwerte eine Regelung der Motorsteuerung, die zwingend eine Messung der Zusammensetzung des Abgases durch einen Messfühler im Abgassystem erfordert. Beispielsweise werden oftmals Lambda-Sonden im Abgassystem eingesetzt, um Informationen über das Luft-Kraftstoffverhältnis zu erhalten.

Dabei offenbart die WO 03/074925 A1 einen metallischen Wabenkörper mit Metallfolien und einem Mantelrohr, wobei der Wabenkörper eine Ausnehmung zur Aufnahme eines Messfühlers und das Mantelrohr ein Flanschstück zur Befestigung des Messfühlers aufweist.

Gerade bei keramischen Wabenstrukturen führt jedoch das Einbringen einer Lambda-Sonde oder allgemein eines Messfühlers in die Wabenstruktur zu einer Schwächung der Wabenstruktur, da diese in einem Teilbereich mit einer Ausnehmung versehen werden muss, in welche der Messfühler in Eingriff kommt. Eine solche initiale Schwächung der Wabenstruktur führt jedoch im Allgemeinen dazu, dass insbesondere bei einer kraft- und/oder formschlüssigen Verbindung des Mantelrohrs mit der Wabenstruktur diese durch die bereits bestehende Schwächung der Wabenstruktur weiter geschädigt wird. Da es beim Betrieb des Wabenkörpers im Abgassystem zu steten Erwärmungs- und Abkühlungsprozessen kommt, die zu starken thermischen Gradienten und/oder Transienten im Wabenkörper führen, führt dies aufgrund der dadurch veränderten von außen vom Mantelrohr einwirkenden Kraft auf die Wabenstruktur zu einer langsam weitergehenden Schädigung der Wabenstruktur.

Aufgabe der vorliegenden Erfindung ist es, die mit Bezug auf den Stand der Technik beschriebene Probleme zumindest zu verringern und insbesondere einen Wabenkörper und ein Herstellungsverfahren für einen Wabenkörper vorzuschlagen, bei dem das Mantelrohr so mit der Wabenstruktur verbunden ist, dass trotz Ausbildung einer Ausnehmung für einen Messfühler in der Wabenstruktur die Wabenstruktur sicher im Mantelrohr gehalten wird und andererseits eine schleichende Schädigung der Wabenstruktur vermieden wird.

Diese Aufgaben werden erfindungsgemäß gelöst durch einen Wabenkörper und ein Verfahren mit den Merkmalen der unabhängigen Ansprüche. Vorteilhafte Weiterbildungen sind Gegenstand der jeweiligen abhängigen Ansprüche.

Der erfindungsgemäße Wabenkörper dient insbesondere zum Einsatz im Abgassystem eines Kraftfahrzeugs. Der erfindungsgemäße Wabenkörper umfasst eine zumindest teilweise keramische für ein Fluid durchströmbare Wabenstruktur in einem Mantelrohr, wobei die Wabenstruktur Hohlräume aufweist. Der Wabenkörper weist in einer Längsrichtung mindestens zwei axiale Teilbereiche auf, wobei die Wabenstruktur in mindestens einem axialen Befestigungsbereich mit dem Mantelrohr verbunden ist und mindestens ein axialer Messfühlerbereich mit einer Ausnehmung zur Aufnahme mindestens eines Messfühlers in der Wabenstruktur ausgebildet ist.

Dabei ist die Verbindung zwischen Mantelrohr und Wabenstruktur so auszugestalten, dass die im Befestigungsbereich eingebrachten Haltekräfte größer, bevorzugt deutlich größer, als die Haltekräfte sind, die gegebenenfalls im Abdicht- und/oder Messfühlerbereich in die Wabenstruktur eingebracht werden. Dies gilt insbesondere auch für eine gemittelte Haltekraft, die über den möglichen Bereich der Temperaturen, denen ein Wabenkörper ausgesetzt ist, gemittelt ist Insbesondere ist die Verbindung so ausgestaltet, dass es keine Temperatur innerhalb dieses Temperaturbereichs, bevorzugt bis zu einer Temperatur von 900°C, gibt, bei der eine Haltekraft im Befestigungsbereich kleiner oder gleich einer Haltekraft im Abdicht- und/oder Messfühlerbereich ist. Weiterhin bevorzugt ist eine Ausbildung der Verbindung zwischen Mantelrohr und Wabenstruktur, bei der der Quotient einer Haltekraft im Befestigungsbereich zu einer Haltekraft im Abdicht- und/oder Messfühlerbereich größer oder gleich 1,5, bevorzugt größer oder gleich 2, besonders bevorzugt größer oder gleich 3 oder sogar 4 ist Weiterhin bevorzugt gelten diese Beziehungen auch für gemittelte Haltekräfte, wobei eine Mittelung in axialer, radialer und/oder Umfangsrichtung oder auch über einen Temperaturbereich, bevorzugt dem Bereich der Temperaturen, denen der Wabenkörper im Betrieb im Abgassystem eines Kraftfahrzeugs ausgesetzt ist, erfolgen kann.

Insbesondere ist bei einem erfindungsgemäßen Wabenkörper die Wabenstruktur nur im Befestigungsbereich mit dem Mantelrohr verbunden. Weiterhin ist bevorzugt, dass im Messfühlerbereich keine direkte Verbindung zwischen Mantelrohr und Wabenstruktur ausgebildet ist. Unter einem Kraftfahrzeug wird in diesem Zusammenhang insbesondere ein Automobil wie ein Personen- oder Lastkraftwagen, ein motorisiertes Zweirad, Quad, ein Boot und/oder ein Luftfahrzeug verstanden. Eine zumindest teilweise keramische Wabenstruktur im Sinne der vorliegenden Erfindung kann auch metallische Anteile aufweisen, beispielsweise metallische Verstärkungs- oder Leitungselemente, die in die keramischen Wände eingearbeitet sind. Bevorzugt sind Wabenstrukturen, die durch Extrudieren hergestellt werden. Die Wabenstruktur kann für ein Fluid wie zum Beispiel Abgas undurchlässige Wände aufweisen, so dass hier die Hohlräumen, beispielsweise Kanäle, für ein Fluid durchströmbar sind. Jedoch ist auch die Ausbildung zumindest eines Teils der Wände aus einem porösem Material, insbesondere einer porösen Keramik möglich. Zumindest ein Teil der Hohlräume der Wabenstruktur können auch verschlossen sein. Der erfindungsgemäße Wabenkörper eignet sich insbesondere zum Einsatz als Katalysatorträgerkörper oder als Filterkörper, besonders bevorzugt auch als Diesel-Partikelfilter.

Bevorzugt weist das Mantelrohr ein Loch auf, durch welches der Messfühler hindurchtreten kann. Die Abmessungen dieses Lochs sind bevorzugt im Wesentlichen identisch zu den Abmessungen der Ausnehmung in der Wabenstruktur. Weiterhin können in vorteilhafter. Weise Mittel zum Verbinden, insbesondere zum gasdichten Verbinden, des Messfühlers mit dem Wabenkörper ausgebildet sein, insbesondere ein Gewinde, welches mit einem Gewinde am Messfühler kommuniziert.

Bei dem erfindungsgemäßen Wabenkörper kann ein Messfühler in die Ausnehmung der Wabenstruktur eingebracht werden, wobei diese Ausnehmung zwar eine Schwächung der Wabenstruktur darstellt, diese aber nicht zu stetig fortschreitenden Schädigungen der Wabenstruktur führen kann, da eine entsprechende Befestigung im Befestigungsbereich ausgebildet ist. Insbesondere kann im Befestigungsbereich eine kraft-, form- und/oder stoffschlüssige Verbindung zwischen Mantelrohr und Wabenstruktur ausgebildet sein. Weiterhin ist es erfindungsgemäß möglich, dass ein Zwischenelement zwischen Mantelrohr und Wabenstruktur ausgebildet ist, welche insbesondere auch die Verbindung vermitteln kann. Hierbei kann es sich beispielsweise um eine Quellmatte handeln. Eine Quellmatte besteht insbesondere aus einer Mischung verschiedener Keramikfasern und Mineralien, die gegebenenfalls zur besseren Handhabbarkeit mit Papierfasern gebunden sind. Als mineralische Anteile werden beispielsweise Vermikulitpartikel in die Quellmatte eingebracht. Hierbei handelt es sich um ein Schichtsilikat, welches bei höheren Temperaturen mittels reversibler Wasserabgabe durch Expansion für eine Dickenänderung der Quellmatte sorgt. Diese kann insbesondere zur aktiven Verspannung der Wabenstruktur im Mantelrohr bei Erhöhung der Betriebstemperatur dienen. Somit wird im Falle einer kraft- und/oder formschlüssigen Verbindung zwischen Mantelrohr und Wabenstruktur diese auch bei höheren Temperaturen wie der Betriebstemperatur des Katalysatorträgerkörpers erhalten. Der erfindungsgemäße Wabenkörper erlaubt eine hohe Betriebssicherheit ohne Schädigung des Wabenkörpers auch über längere Zeiträume hinweg, da die Haltekräfte mittels derer eine Verbindung zwischen Mantelrohr und Wabenstruktur ausgebildet ist, bevorzugt nur im Befestigungsbereich eingebracht werden.

Gemäß einer vorteilhaften Ausgestaltung des erfindungsgemäßen Wabenkörpers umfasst der Wabenkörper einen axialen Abdichtbereich, in dem zwischen Wabenstruktur und Mantelrohr ein Dichtmittel ausgebildet ist.

Dieses Dichtmittel verhindert vorteilhafterweise eine Bypassströmung des Abgases um die Wabenstruktur herum. Besonders bevorzugt ist eine Ausbildung des Dichtmittels, welches eine Abdichtung über den gesamten Umfangsbereich bewirkt. Das Dichtmittel ist in einem solchen Fall bevorzugt vollumfänglich ausgebildet. Als Dichtmittel eignet sich insbesondere eine keramische Fasermatte, eine Quellmatte und/oder Glimmer. Insbesondere ist vorteilhaft, dass das Dichtmittel so ausgebildet ist, dass im Abdichtbereich im Wesentlichen keine kraft- und/oder formschlüssige Verbindung zwischen Mantelrohr und Wabenstruktur vermittelt wird. Allerdings ist es auch möglich und erfindungsgemäß, eine nur sehr schwache Anbindung in diesem Bereich vorzusehen, so dass die Kräfte, die bei Erwärmung einer als Dichtmittel ausgebildeten Quellmatte auftreten, so gering sind, dass es im Abdichtbereich und/oder im Messfühlerbereich nicht zu einer Schädigung der Wabenstruktur kommt.

Gemäß einer weiteren vorteilhaften Ausgestaltung des erfindungsgemäßen Wabenkörpers ist der Messfühlerbereich in Längsrichtung zwischen Abdichtbereich und Befestigungsbereich ausgebildet. Insbesondere ist der Abdichtbereich im Bereich einer Stirnseite des Wabenkörpers ausgebildet.

Durch den Abdichtbereich wird dann in besonders vorteilhafter Weise ein Umströmen der Wabenstruktur durch das Abgas vermieden, was dazu führen würde, dass im vorderen stirnseitigen Bereich des Wabenkörpers eine geringere Umsetzrate als im hinteren Bereich erreicht wird. In diesem Zusammenhang ist es vorteilhaft, dass der Abdichtbereich einen Ausblasschutz in Richtung der Stirnseite des Wabenkörpers umfasst. Ein Ausblasschutz dient der Verhinderung des Ausfaserns des Abdichtbereichs. Ein solches Ausfasern kann beispielsweise dadurch entstehen, dass das stark pulsatile Abgas auf die Stirnseite des Abdichtbereichs trifft. Der Ausblasschutz kann beispielsweise aus einer dünnen Metallfolie bestehen, welche um den stirnseitigen Endbereich des Abdichtbereichs herumgelegt und bevorzugt mit diesem fügetechnisch verbunden ist. Auch eine kraft- und/oder formschlüssige Verbindung zwischen Ausblasschutz und Abdichtbereich ist erfindungsgemäß möglich. Beispielsweise kann eine Bördelung oder sonstiger mechanische Verklammerung zwischen Ausblasschutz und Abdichtbereich vornenommen werden. Besonders bevorzugt ist die Ausbildung eines Ausblasschutzes im Bereich einer gaseihtrittsseitigen Stirnseite des Wabenkörpers.

Gemäß einer weiteren vorteilhaften Ausgestaltung des erfindungsgemäßen Wabenkörpers ist die Verbindung zwischen Wabenstruktur und Mantelrohr zumindest auf eine der folgenden Arten ausgebildet:
a) kraftschlüssig,
b) formschlüssig, oder
c) stoffschlüssig.

Bevorzugt ist hier die Ausbildung einer kraftschlüssigen oder auch formschlüssigen Verbindung zwischen Mantelrohr und Wabenstruktur im Befestigungsbereich mittels eines Presssitzes. Bevorzugt ist hierbei die Ausbildung einer Quellmatte zwischen Wabenstruktur und Mantelrohr zumindest im Befestigungsbereich.

Gemäß einer weiteren vorteilhaften Ausgestaltung des erfindungsgemäßen Wabenkörpers ist im Befestigungsbereich eine Verbindung zwischen Mantelrohr und Wabenstruktur in axialen und/oder umfänglichen Teilbereichen ausgebildet..

Folglich muss das Mantelrohr nicht im gesamten Befestigungsbereich mit der Wabenstruktur verbunden sein. Es können sowohl umfängliche als auch axiale Teilbereiche ausgebildet sein, in denen die Verbindung vermittelt wird. Dies kann insbesondere dadurch erfolgen, dass entsprechende Teilbereiche des Mantelrohrs einen kleineren Innendurchmesser aufweisen als andere Teilbereiche oder dass eine zwischen Mantelrohr und Wabenstruktur liegende Matte Teilbereiche mit unterschiedlichem intumeszierendem Verhalten oder auch Teilbereiche unterschiedlicher Dicke aufweisen. Weiterhin bevorzugt ist auch alternativ und/oder zusätzlich die Ausbildung entsprechender Bereiche mit größerem Außendurchmesser an der Wabenstruktur.

Gemäß einer weiteren vorteilhaften Ausgestaltung des erfindungsgemäßen Wabenkörpers ist zwischen Wabenstruktur und Mantelrohr zumindest in einem Teilbereich eine flexible und/oder elastische Matte ausgebildet.

Hierbei kann es sich bevorzugt um eine Quellmatte, eine Fasermatte, insbesondere eine keramische Fasermatte, und/oder eine Matte enthaltend Glimmer handel

Gemäß einer weiteren vorteilhaften Ausgestaltung des erfindungsgemäßen . Wabenkörpers ist zwischen Wabenstruktur und Mantelrohr zumindest in einem Teilbereich eine Quellmatte, eine keramische Fasermatte und/oder eine Zwischenschicht aus Glimmer ausgebildet.

Insbesondere kann hier die gesamte Wabenstruktur mit einer Matte umgeben sein, die entsprechend einen Teilbereich aufweist, welcher dem Befestigungsbereich entspricht. In diesem Teilbereich könnten entsprechende intumeszierende Teilbereiche ausgebildet sein, die zu einer Vermittlung eines Kraft- und/oder Formschlusses zwischen Mantelrohr und Wabenstruktur auch dann führen, wenn sich Wabenstruktur und/oder Mantelrohr erwärmt. Eine solche Matte kann einen weiteren Teilbereich aufweisen, der dem Messfühlerbereich entspricht. In diesem Teilbereich sind keine intumeszierenden Bereiche ausgebildet, ferner weist dieser Bereich ein Loch zum Durchtritt des Messfühlers auf. Gegebenenfalls kann in einem weiteren Teilbereich, der beispielsweise einem Abdichtbereich entspricht, ein Bereich ausgebildet sein, welcher intumeszierend ist.

Gemäß einer weiteren vorteilhaften Ausgestaltung des erfindungsgemäßen Wabenkörpers weist das Mantelrohr im Messfühlerbereich einen zweiten Innendurchmesser auf, der größer ist als ein erster Innendurchmesser des Befestigungsbereichs.

Dies stellt ein weiteres erfindungsgemäßes Mittel dar, mittels dem ein Kraftschluss zwischen Mantelrohr und Wabenstruktur im Wesentlichen auf dem Befestigungsbereich begrenzt werden kann. Wird in einem solchen Fall zwischen Mantelrohr und Wabenstruktur eine Quellmatte ausgebildet, so führt der vergrößerte zweite Innendurchmesser im Messfühlerbereich dazu, dass bei entsprechender Ausgestaltung der Quellmatte in Bezug auf deren intumeszierende Eigenschaften ein Kraftschluss im kalten Zustand nur im Befestigungsbereich vermittelt wird, während im Messfühlerbereich keine kraftschlüssige Verbindung zwischen Mantelrohr und Wabenstruktur ausgebildet ist. Auch bei Erwärmen des Wabenkörpers führt dies nicht zur Ausübung von Kräften im Messfühlerbereich, wenn die Differenz der Dicke der Quellmatte im erhitzten Zustand zur Dicke im kalten Zustand entsprechend auf die Differenz des zweiten Innendurchmessers zum ersten Innendurchmesser abgestimmt wird.

Gemäß einer weiteren vorteilhaften Ausgestaltung des erfindungsgemäßen Wabenkörpers ist das Mantelrohr zumindest im Messfühlerbereich zumindest in umfänglichen und/oder axialen Teilbereichen nach außen aufgewölbt. Besonders bevorzugt ist es hierbei, wenn im Bereich der Ausnehmung für den Messfühler ein umfänglicher Teilbereich vorliegt, der außen ausgewölbt ist. So wird in diesem sensiblen Teilbereich eine Einleitung von Kräften aufgrund der unterschiedlichen thermischen Ausdehnung von Mantelrohr und Wabenstruktur weiterhin sicher vermieden.

Gemäß einer weiteren vorteilhaften Ausgestaltung des erfindungsgemäßen Wabenkörpers ist die Ausnehmung in einem Abstand von zwischen 20 und 60 mm, bevorzugt zwischen 30 und 50 mm, besonders bevorzugt zwischen 35 und 45 mm hinter einer Stirnseite des Wabenkörpers ausgebildet.

Der Abstand kann hierbei zur einem zentralen Punkt der Ausnehmung für den Messfühler berechnet werden, jedoch ist es genauso gut möglich, einen der Randpunkte dieser Ausnehmung als Referenzpunkt zu verwenden. Insbesondere bei langen Wabenkörpern ist so die Ausbildung eines Messfühlers im Bereich des vorderen Drittels des Wabenkörpers vorteilhaft.

Gemäß einem weiteren Aspekt der vorliegenden Erfindung wird ein Verfahren zur Herstellung eines Wabenkörpers vorgeschlagen, welches die folgenden Schritte umfasst;
a) Bereitstellung einer zumindest teilweise keramische für ein Fluid durchströmbare Wabenstruktur mit mindestens einer Ausnehmung zur Aufnahme eines Messfühlers;
b) Bereitstellen eines Mantelrohrs mit mindestens einem Loch zum Durchführen des Messfühlers ;
c) Einbringen der Wabenstruktur in das Mantelrohr und Verbinden der Wabenstruktur mit dem Mantelrohr in mindestens einem axialen Befestigungsbereich,
wobei vor oder während Schritt c) eine Ausrichtung der Wabenstruktur und des Mantelrohrs relativ zueinander erfolgt, so dass das Loch im Mantelrohr und die Ausnehmung in der Wabenstruktur nach Schritt c) einander zumindest teilweise überlappen.

Vor oder während Schritt c) erfolgt eine Ausrichtung der Wabenstruktur und des Mantelrohr relativ zueinander, bei der gewährleistet wird, dass das Loch im Mantelrohr nach Schritt c) so über Ausnehmung der Wabenstruktur liegt, dass ein Einführen des Messfühlers durch das Loch in die Ausnehmung erfolgen kann, also Loch und Ausnehmung einander insbesondere zumindest teilweise überlappen. So kann insbesondere vor dem Einführen der Wabenstruktur in das Mantelrohr zunächst eine parallele Ausrichtung der Längsachsen der Wabenstruktur und des Mantelrohrs erfolgen, worauf eine Drehung der Wabenstruktur und/oder des Mantelrohrs erfolgen kann, bis die Ausrichtung des Loches und der Ausnehmung so übereinstimmen, dass nach dem Einführen der Wabenstruktur in das Mantelrohr Loch und Ausnehmung einander überlappen. Dann erfolgt das Einbringen der Wabenstruktur in das Mantelrohr.

Insbesondere kann während und/oder vor Schritt c) eine Zwischenschicht zwischen die Wabenstruktur und das Mantelrohr eingebracht werden. Bevorzugt umfasst dabei die Zwischenschicht mindestens eines der folgenden Materialien:
- eine Quellmatte,
- eine keramische Fasermatte,
- eine Zwischenschicht aus Glimmer,
- eine poröse metallische Matte,
- eine elastische Matte und
- eine flexible Matte.

Bevorzugt ist die Zwischenschicht inhomogen. Insbesondere kann die Kompressibilität, die Dicke der Zwischenschicht und/oder die Temperaturabhängigkeit des Expansionsverhaltens über die Zwischenschicht variieren, so dass mittels einer solchen Zwischenschicht eine räumlich selektive Verbindung zwischen Mantelrohr und Wabenstruktur insbesondere ausschließlich in mindestens einem Befestigungsbereich ausgebildet werden kann. Grundsätzlich erfolgt die Verbindung zwischen Mantelrohr und Wabenstruktur bevorzugt kraftschlüssig. Der dem Befestigungsbereich entsprechende Teil der Zwischenschicht ist so ausgeführt, dass die Verbindung zwischen Mantelrohr und Wabenstruktur auch bei Erwärmung des Mantelrohrs und/oder der Wabenstruktur erhalten bleibt. Unter einer porösen metallischen Matte wird insbesondere eine Drahtgestrickmatte verstanden.

Gemäß einer weiteren vorteilhaften Ausgestaltung des erfindungsgemäßen Verfahrens umfasst Schritt c) das Zusammenfügen mindestens zweier Mantelrohrteile um die Wabenstruktur. Hierbei handelt es sich um ein sogenanntes Mehrschalen-Canning, welches insbesondere als Zweischalen-Canning zum Einsatz kommt. Hierbei ist das Mantelrohr aus zwei Hälften aufgebaut, die zusammengefügt werden. Die Verbindung zwischen den Mantekohrteilen erfolgt dabei bevorzugt stoffschlüssig, insbesondere durch Schweißen: Bevorzugt wird durch das Zusammenfügen der Mantelrohrteile wird eine zwischen Mantelrohrteil und Wabenstruktur zumindest in Teilbereichen liegende Zwischenschicht, beispielsweise eine Quellmatte, so komprimiert, dass eine kraftschlüssige Verbindung zwischen Mantelrohr und Wabenstruktur durch die Zwischenschicht vermittelt wird.

Gemäß einer weiteren vorteilhaften Ausgestaltung des erfindungsgemäßen Verfahrens wird in Schritt c)
- die Wabenstruktur mit einer kompressiblen Matte umgeben und
- die von der Matte umgebene Wabenstruktur unter Kompression der Matte in das Mantelrohr gedrückt.

Hierbei handelt es sich um ein so genanntes Stopfcanning. Durch die Kompression der Matte wird eine kraftschlüssige Verbindung zwischen Mantelrohr und Wabenstruktur vermittelt.

Gemäß einer weiteren vorteilhaften Ausgestaltung des erfindungsgemäßen Verfahrens wird das Mantelrohr in Schritt c) in mindestens einer Lage um die Wabenstruktur gewickelt.

Die für den erfindungsgemäßen Wabenkörper offenbarten Details und Vorteile sind auf das erfindungsgemäße Verfahren anwend- und übertragbar. In gleicher Weise lassen sich die für das erfindungsgemäße Verfahren offenbarten Details und Vorteile auf den erfindungsgemäßen Wabenkörper übertragen und anwenden. Weitere Vorteile und Ausführungsbeispiele der vorliegenden Erfindung werden im Folgenden anhand der Zeichnung erläutert. Die Erfindung ist nicht auf die in den Figuren gezeigten Ausführungsbeispiele, Vorteile und Details beschränkt. Es zeigen:
- Figur 1: schematisch ein Ausführungsbeispiel eines erfindungsgemäßen Wabenkörpers in perspektivischer Ansicht;
- Figur 2: ein weiteres Ausführungsbeispiel eines erfindungsgemäßen Wabenkörpers schematisch im Längsschnitt;
- Figur 3: schematisch ein weiteres Ausführungsbeispiel eines erfindungsgemäßen Wabenkörpers im Längsschnitt;
- Figur 4: schematisch ein weiteres Ausführungsbeispiel eines erfindungsgemäßen Wabenkörpers im Querschnitt; und
- Figur 5: eine Matte, insbesondere zur Vermittlung einer Verbindung zwischen Mantelrohr und Wabenstruktur eines erfindungsgemäßen Wabenkörpers.

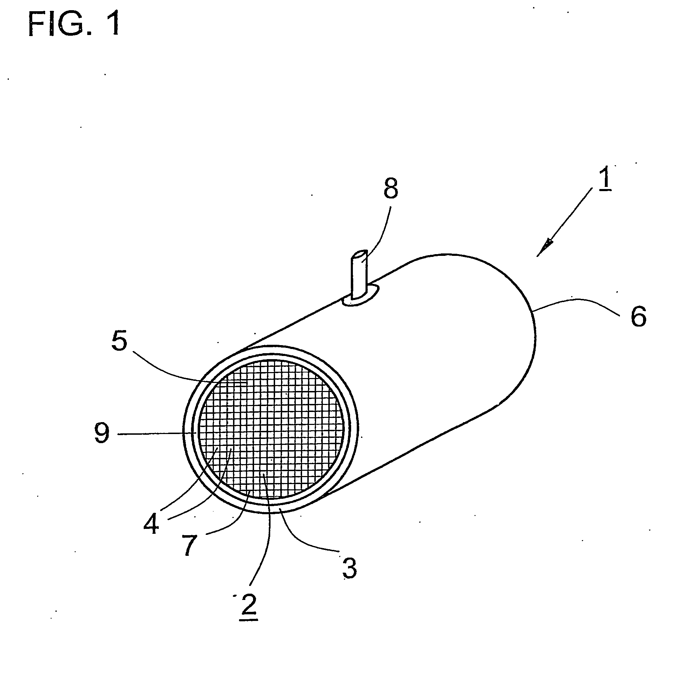

Figur 1 zeigt einen erfindungsgemäßen Wabenkörper 1 umfassend eine keramische Wabenstruktur 2 in einem Mantelrohr 3. Die Wabenstruktur 2 weist eine Mehrzahl von für ein Fluid durchströmbaren Hohlräumen 4 auf. Im vorliegenden Ausführungsbeispiel erstrecken sich die Hohlräume 4 durchgehend von einer ersten Stirnseite 5 zu einer zweiten Stirnseite 6 des Wabenkörpers 1. Es ist jedoch auch möglich, dass zumindest ein Teil der Hohlräume 4 zumindest teilweise verschlossen ist. Insbesondere ist es auch möglich, dass die die Hohlräume 4 bildenden Wände 7 zumindest teilweise für ein Fluid durchströmbar, insbesondere porös sind. So können auch erfindungsgemäße Wabenkörper 1 ausgebildet sein, die neben beispielsweise einer Funktion als Katalysatorträgerkörper auch eine Funktion eines Partikelfilters erfüllen. Eine Beschichtung, insbesondere eine katalytisch aktive Beschichtung bevorzugt auf Basis von Washcoat kann auf den Wänden 7 ausgebildet sein.

Der Wabenkörper 1 weist ferner einen Messfühler 8 auf. Bei dem Messfühler 8 handelt es sich bevorzugt um eine Lambda-Sonde, jedoch kann der Messfühler 8 auch alternativ oder zusätzlich weitere Funktionen erfüllen, beispielsweise die Funktion eines Temperatursensors, eines Gaskonzentrationssensors, usw.. Im Bereich der ersten Stirnwand 5 ist ein Dichtmittel 9 ausgebildet.

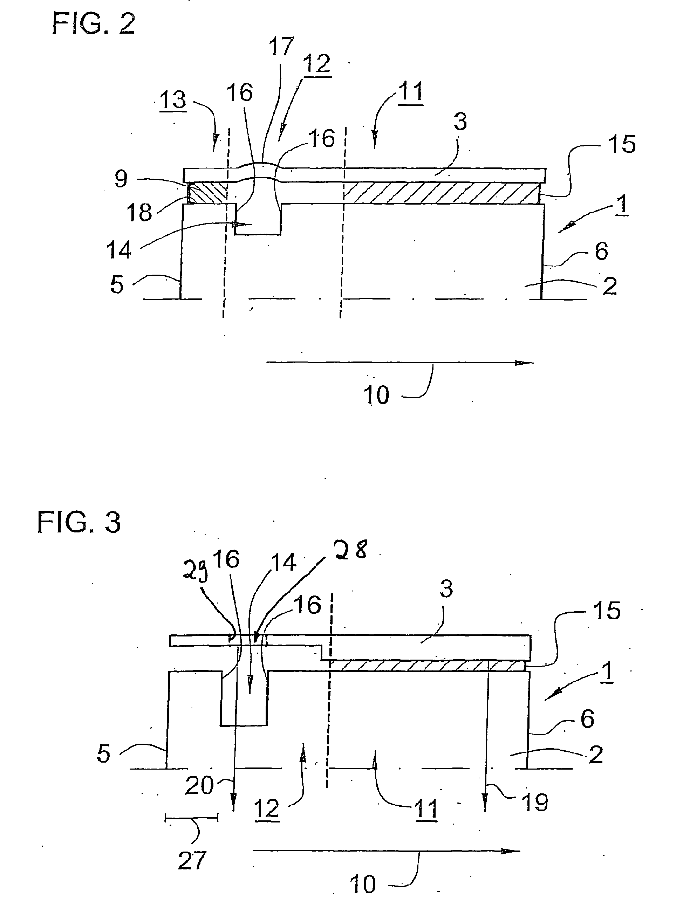

Figur 2 zeigt schematisch einen Längsschnitt durch ein weiteres Ausführungsbeispiel des erfindungsgemäßen Wabenkörpers 1. In einer Längsrichtung 10 weist der Wabenkörper 1 im vorliegenden Ausführungsbeispiel drei Axialteilbereiche 11, 12, 13 auf. In einem axialen Befestigungsbereich 11 ist das Mantelrohr 3 mit der Wabenstruktur 2 verbunden. Weiterhin weist der Wabenkörper 1 einen axialen Messfühlerbereich 12 auf, in dem eine Ausnehmung 14 zur Aufnahme eines Messfühlers 8 in der Wabenstruktur 2 ausgebildet ist. Weiterhin ist im vorliegenden Ausführungsbeispiel ein axialer Abdichtbereich 13 ausgebildet, in dem ein Dichtmittel 9 zwischen Mantelrohr 3 und Wabenstruktur 2 ausgebildet ist.

Im vorliegenden Ausführungsbeispiel ist im Befestigungsbereich 11 zwischen Mantelrohr 3 und Wabenstruktur 2 eine Stützmatte 15 ausgebildet. Bei einer Stützmatte 15 kann es sich beispielsweise um eine Quellmatte, eine Fasermatte, insbesondere eine keramische Fasermatte und/oder eine Schicht aus Glimmer handeln. Bevorzugt weist die Stützmatte die Eigenschaft auf, dass sie sich bei steigender Temperatur ausdehnt. Dies kann beispielsweise dadurch erreicht werden, dass Vermikulit in die Matte eingearbeitet wird. Vermikulit dehnt sich bei hohen Temperaturen, insbesondere im Bereich von 300°C bis 700°C aus. Dieses thermische Ausdehnungsverhalten der Stützmatte 15 kann genutzt werden, um der unterschiedlichen thermischen Ausdehnung von Mantelrohr 3 und Wabenstruktur 2 entgegenzuwirken. Wenn die Wabenstruktur 2 kraft- und/oder formschlüssig mit dem Mantelrohr 3 verbunden ist, kann eine solche intumeszierende Stützmatte 15 dazu dienen, den Kraft- und/oder Formschluss auch im erhitzten Zustand des Wabenkörpers zu vermitteln.

Stützmatten 15, insbesondere dann, wenn sie intumeszierend sind, also sich thermisch ausdehnen, führen dazu, dass eine temperaturabhängige Kraft auf die Wabenstruktur 2 wirkt. Die Wabenstruktur 2, insbesondere die Wände 7, der Wabenstruktur 2 sind so ausgelegt, dass sie im wesentlichen zumindest die größten Kräfte aufnehmen können, die die Stützmatte 15 bei Erhitzung auf die Wabenstruktur 2 ausübt.

Im Messfühlerbereich 12 ist die Ausnehmung 14 mit den Ausnehmungsrändem 16 ausgebildet. Die Ausnehmung 14 dient der Aufnahme eines Messfühlers 8 in die Wabenstruktur 2. Die Ausnehmung 14 bewirkt ferner eine Schwächung der Wabenstruktur 2 im Messfühlerbereich 12, so dass in diesem Bereich nur geringere Kräfte als im Befestigungsbereich 11 durch die Wabenstruktur 2 aufgenommen werden können. Um hier eine Schädigung der Wabenstruktur 2 im Messfiihlerbereich 12 zu vermeiden, wird erfindungsgemäß vorgeschlagen, den Krafteintrag in die Wabenstruktur 2 im Messfühlerbereich 12 im Vergleich zum Befestigungsbereich 11 zu verringern oder keine entsprechende Kraft im Messfühlerbereich 12 einzuleiten. Dies kann erfindungsgemäß beispielsweise dadurch geschehen, dass im Messfühlerbereich 12 zumindest im umfänglichen Bereich der Ausnehmung 14 und gegebenenfalls in geeignet groß zu wählenden benachbarten Bereichen keine Stützmatte 15 oder eine nicht intumeszierende Matte in diesem Bereich ausgebildet wird. Dies kann beispielsweise dadurch erfolgen, dass eine entsprechende Stützmatte 15 mit einem Loch im Bereich der Ausnehmung versehen wird oder dass eine mehrteilige Stützmatte 15 Verwendung findet.

Alternativ oder zusätzlich ist es erfindungsgemäß möglich, das Mantelrohr 2 im Messfühlerbereich 12 zumindest in Teilbereichen 17 nach außen auszuwölben. Insbesondere kann es sich beim Teilbereich 17 um einen umfänglichen und/axialen Teilbereich 17 des Messfühlerbereichs 12 handeln. Auch hierdurch wird ein Krafteintrag in die Wabenstruktur 2 im Messfühlerbereich 12 vorteilhaft verringert und/oder vermieden.

Weiterhin ist im vorliegenden Ausführungsbeispiel ein Abdichtbereich 13 ausgebildet. Im Abdichtbereich 13 ist ein Dichtmittel 9 zwischen Mantelrohr 3 und Wabenstruktur 2 ausgebildet. Hierbei kann es sich bevorzugt um eine Quellmatte, eine Fasermatte und/oder Glimmer handeln. Insbesondere können die Stützmatte 15 und das Dichtmittel 9 eine einstückige entsprechend ausgebildete Matte mit entsprechenden Auslassungen im Messfühlerbereich 12 sein. Das Dichtmittel 9 dient insbesondere der Verhinderung oder Verminderung einer Bypassströmung des Abgases vorbei an der Wabenstruktur 2. Gegebenenfalls kann das Dichtmittel 9 zumindest in Teilbereichen intumeszierend sein. Hier bietet sich insbesondere an, den Teilbereich, der an einer Stirnseite 5, 6 des Wabenkörpers 1 ausgebildet ist, intumeszierend auszubilden. Hierdurch wird eine besonders gute Dichtwirkung in diesem Bereich erreicht. Das Dichtmittel 9 ist in einem solchen Falle so auszubilden, dass der auf Intumineszenz in diesem Bereich beruhende Krafteintrag nicht zu einer Schädigung der Wabenstruktur 2 führt. Besonders vorteilhaft ist es in diesem Zusammenhang, einen entsprechenden Bereich des Dichtmittels möglichst klein zu wählen.

Weiterhin umfasst das Dichtmittel 9 bevorzugt einen Ausblasschutz 18 in Richtung einer Stirnseite 5,6 des Wabenkörpers 1. Dieser Ausblasschutz 18 kann beispielsweise durch ein entsprechend kraft-, form- und/oder stoffschlüssig verbundenes bevorzugt dünnes Blech in diesem Bereich des Dichtmittels 9 gebildet werden.

Figur 3 zeigt einen Längsschnitt durch ein weiteres Ausführungsbeispiel eines erfindungsgemäßen Wabenkörpers 1. Der Wabenkörper 1 umfasst eine Wabenstruktur 2, die in einem Mantelrohr 3 gehalten ist. In Längsrichtung 10 umfasst der Wabenkörper 1 einen Befestigungsbereich 11 und einen Messfühlerbereich 12. Im Befestigungsbereich 11 ist zwischen Mantelrohr 3 und Wabenstruktur 2 eine Stützmatte 15 ausgebildet, die sich bei Wärme ausdehnt, um unterschiedliche thermische Ausdehnungsverhalten des Mantelrohrs 3 und der Wabenstruktur 2 auszugleichen. Im Messfühlerbereich 12 ist eine Ausnehmung 14 mit Ausnehmungsrändern 16 für die Aufnahme eines Messfühlers 8 vorgesehen. Zur weiteren Verringerung des Krafteintrags auf die Wabenstruktur 2 weist das Mantelrohr 3 erfindungsgemäß zwei Innendurchmesser 19, 20 auf. Der erste Innendurchmesser 19 liegt im Befestigungsbereich 11 vor, während der zweite Innendurchmesser 20 im Messfühlerbereich 12 vorliegt. Der erste Innendurchmesser 19 ist kleiner als der zweite Innendurchmesser 20, so dass nur im Befestigungsbereich 11 Kräfte vom Mantelrohr 3 auf die Wabenstruktur 2 wirken können. Im vorliegenden Ausführungsbeispiel deckt sich die Kante der Stützmatte 15 nicht mit dem Bereich des Mantelrohrs 3, indem sich der Innendurchmesser vom ersten Innendurchmesser 19 auf den zweiten Innendurchmesser 20 ändert. Diese beiden Punkte können aber auch zusammenfallen. In Fig. 3 ist auch exemplarisch ein Loch 28 mit Lochrand 29 im Mantelrohr 3 gezeigt. Loch 28 und Ausnehmung 14 überlappen einander zumindest teilweise, so dass ein Messfühler durch das Loch 28 in die Ausnehmung 14 eingebracht werden kann. Für weitere Details sei auf die Beschreibung zu Figur 2 verwiesen.

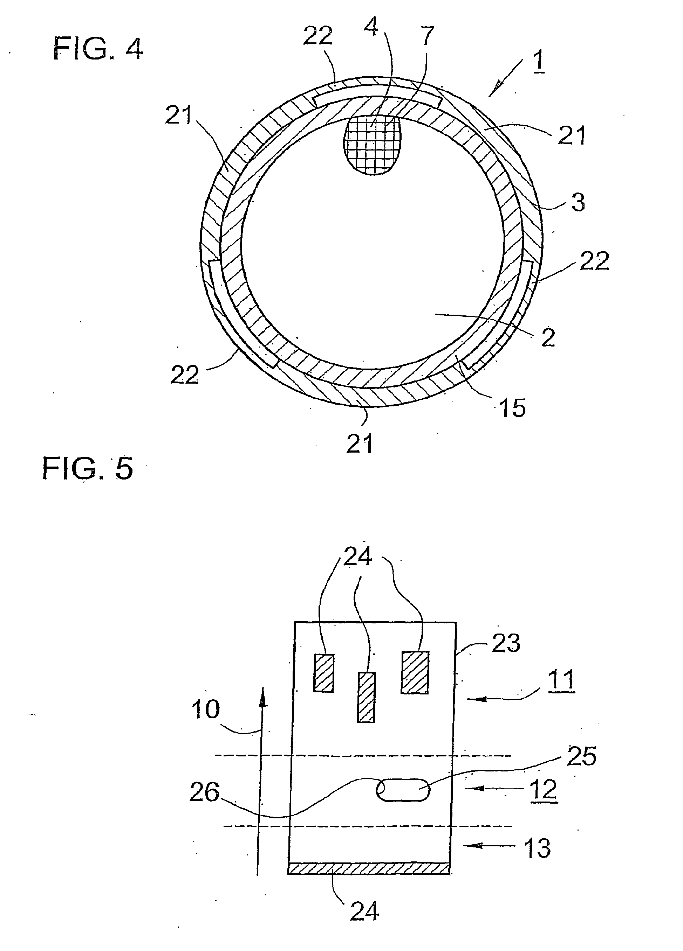

Figur 4 zeigt ein weiteres Ausführungsbeispiel eines erfindungsgemäßen Wabenkörpers im Querschnitt. Der Querschnitt liegt im Befestigungsbereich 11. Der Wabenkörper 1 umfasst ein Mantelrohr 3 und eine Wabenstruktur 2 mit durch Wände 7 begrenzten Hohlräumen 4, die der Übersichtlichkeit halber nur in einem Teilbereich eingezeichnet sind. Zwischen Mantelrohr 3 und Wabenstruktur 2 ist eine Stützmatte 15 ausgebildet. Im Befestigungsbereich 11 weist das Mantelrohr 3 erste Teilbereiche 21 und zweite Teilbereiche 22 auf. Die ersten Teilbereiche 21 weisen dabei einen kleineren Innendurchmesser auf als die zweiten Teilbereiche 22. Hierdurch werden Haltekräfte nur in bestimmten umfänglichen Teilbereichen 21 des Wabenkörpers 1 in die Wabenstruktur 2 eingebracht. Die räumliche Ausbildung der Teilbereiche 21, 22 kann dabei sowohl in axialer als auch in umfänglicher Richtung sowohl symmetrisch als auch asymmetrisch erfolgen. Unter einem Teilbereich in umfänglicher Richtung wird im Sinne dieser Erfindung ein Teilbereich verstanden, welcher nicht über den gesamten Umfang des Querschnitts der Wabenstruktur 2 ausgebildet ist sondern nur teilumfänglich. Auch die räumliche Ausdehnung, insbesondere in umfänglicher Richtung der Teilbereiche 21, 22 kann von Teilbereich 21, 22 zu Teilbereich 21, 22 variieren.

Figur 5 zeigt eine Matte 23, die insbesondere zur Ausbildung eines erfindungsgemäßen Wabenkörpers 1 genutzt werden kann. Die Matte 23 ist bevorzugt eine Quellmatte und/oder keramische Fasermatte. Weiterhin bevorzugt ist alternativ oder zusätzlich die Ausbildung einer Schicht, die zumindest teilweise aus Glimmer besteht. Die Matte 23 befindet sich im erfindungsgemäßen Wabenkörper 1 zwischen Mantelrohr 3 und Wabenstruktur 2. Bereits an der Matte 23 lassen sich die in Längsrichtung 10 liegenden Teilbereiche 11, 12, 13 des Wabenkörpers 1 absehen. Grundsätzlich ist die Matte 23 nicht intumeszierend, wobei jedoch intumeszierende Bereiche 24 ausgebildet sind. Diese intumeszierenden Bereiche 24 enthalten beispielsweise Vermikulit, welches sich bei Erhitzung ausdehnt. Somit kann im Befestigungsbereich 11 eine insbesondere kraft- und/oder formschlüssige Verbindung zwischen Mantelrohr 3 und Wabenstruktur 2 vermittelt werden. Die intumeszierenden Bereiche 24 führen bei Erwärmung zu einem Ausgleich der unterschiedlichen thermischen Expansionsverhalten von Mantelrohr 3 und Wabenstruktur 2, so dass auch im erwärmten Zustand die kraft- und/formschlüssige Verbindung zwischen Mantelrohr 3 und Wabenstruktur 2 erhalten bleibt. Im späteren Messfühlerbereich 12 enthält die Matte 23 ein Loch 25, welches durch einen Lochrand 26 begrenzt ist. Dieses Loch 25 wird beim Aufbau des Wabenkörpers 1 so platziert, dass das Loch 25 über der Ausnehmung 14 der Wabenstruktur 2 positioniert wird, so dass beim Einbau des Messfühlers 8 in den Wabenkörper 1 dieser durch das Loch 25 in die Ausnehmung 14 eintritt. Das Loch 25 verringert neben der Ermöglichung des Durchtritts des Messfühlers 8 auch die Kräfte, welche im Bereich der Ausnehmung 14 in die Wabenstruktur 2 eingebracht werden. Somit verändert das Loch 25 insbesondere auch in Zusammenwirkung mit der nicht intumeszierenden Eigenschaft der Matte 23 im Messfühlerbereich 12 eine Schädigung der Wabenstruktur 2 im Betrieb.

Im späteren Abdichtbereich 13 weist die Matte 23 eine dichtende Eigenschaft auf Hierzu kann sie beispielsweise im Abdichtungsbereich 13 eine größere Dicke aufweisen als im Messfühlerbereich 12. Weiterhin ist es möglich, dass auch am Rande des Abdichtungsbereichs 13 ein intumeszierender Bereich 24 ausgebildet ist, welcher bei Erwärmung dafür sorgt, dass ein Spalt zwischen Mantelrohr 3 und Wabenstruktur 2 entsteht, welcher einen Bypass des Abgases an der Wabenstruktur 2 vorbei ermöglichen wird. Bevorzugt ist die Ausdehnung dieses intumeszierenden Bereichs 24 in Längsrichtung 10 klein gegenüber der Gesamtausdehnung des Abdichtungsbereichs 13 in Längsrichtung 10. Weiterhin kann in diesem stirnseitigen Bereich der Matte 23 alternativ oder zusätzlich ein Ausblasschutz 18 wie oben beschrieben ausgebildet sein, um ein Ausblasen der Matte 23, beispielsweise aufgrund des stark pulsatilen Abgasstroms zu verhindern.

Der erfindungsgemäße Wabenkörper 1 weist aufgrund seiner bevorzugt kraft- und/oder formschlüssigen Verbindung zwischen Mantelrohr 3 und Wabenstruktur 2 im Befestigungsbereich 11 eine dauerhaltbare Verbindung zwischen Mantelrohr 3 und keramischer Wabenstruktur 2 auf, wobei trotz der Ausbildung der Ausnehmung 14 eine weitere Schädigung der Wabenstruktur 2 im Messfühlerbereich 12 vorteilhaft vermieden wird.

### Bezugszeichenliste

- 1: Wabenkörper
- 2: Wabenstruktur
- 3: Mantelrohr
- 4: Hohlraum
- 5: erste Stirnseite
- 6: zweite Stirnseite
- 7: Wand
- 8: Messfühler
- 9: Dichtmittel
- 10: Längsrichtung
- 11: Befestigungsbereich
- 12: Messfühlerbereich
- 13: Abdichtbereich
- 14: Ausnehmung
- 15: Stützmatte
- 16: Ausnehmungsrand
- 17: Teilbereich
- 18: Ausblasschutz
- 19: erster Innendurchmesser
- 20: zweiter Innendurchmesser
- 21: erster Teilbereich
- 22: zweiter Teilbereich
- 23: Matte
- 24: intumeszierender Bereich
- 25: Loch
- 26: Lochrand
- 27: Abstand
- 28: Loch
- 29: Lochrand

## Patentansprüche

1. Wabenkörper (1), insbesondere zum Einsatz im Abgassystem eines Kraftfahrzeugs, umfassend eine zumindest teilweise keramische für ein Fluid durchströmbare Wabenstruktur (2) in einem Mantelrohr (3), wobei die Wabenstruktur (2) Hohlräume (4) aufweist, **dadurch gekennzeichnet, dass** der Wabenkörper (1) in einer Längsrichtung (10) mindestens zwei axiale Teilbereiche (11, 12, 13) aufweist, wobei die Wabenstruktur (2) in mindestens einem axialen Befestigungsbereich (11) mit dem Mantelrohr (3) verbunden ist und mindestens ein axialer Messfühlerbereich (12) mit einer Ausnehmung (14) zur Aufnahme mindestens eines Messfühlers (8) in der Wabenstruktur (2) ausgebildet ist, und wobei die Verbindung zwischen Mantelrohr (3) und Wabenstruktur (2) so gestaltet ist, dass im Befestigungsbereich (11) eingebrachte Haltekräfte größer als Haltekräfte sind, die im Messfümerbereich (12) in die Wabenstruktur (2) eingebracht werden.

2. Wabenkörper (1) nach Anspruch 1, **dadurch gekennzeichnet, dass** der Wabenkörper (1) einen axialen Abdichtbereich (13) umfasst, in dem zwischen Wabenstruktur (2) und Mantelrohr (3) ein Dichtmittel (9) ausgebildet ist.

3. Wabenkörper (1) nach Anspruch 2, **dadurch gekennzeichnet, dass** der Messfühlerbereich (12) in Längsrichtung (10) zwischen Abdichtbereich (13) und Befestigungsbereich (11) ausgebildet ist.

4. Wabenkörper (1) nach Anspruch 2 oder 3, **dadurch gekennzeichnet, dass** der Abdichtbereich (13) im Bereich einer Stirnseite (5, 6) des Wabenkörpers ausgebildet (1) ist.

5. Wabenkörper (1) nach Anspruch 4, **dadurch gekennzeichnet, dass** der Abdichtbereich (13) einen Ausblasschutz (18) in Richtung der Stirnseite (5, 6) des Wabenkörpers (1) umfasst.

6. Wabenkörper (1) nach einem der vorhergehenden Ansprüche, **dadurch gekennzeichnet, dass** die Verbindung zwischen Wabenstruktur (2) und Mantelrohr (3) zumindest auf eine der folgenden Arten ausgebildet ist:
a) kraftschlüssig;
b) formschlüssig; oder
c) stoffschlüssig.

7. Wabenkörper (1) nach einem der vorhergehenden Ansprüche, **dadurch gekennzeichnet, dass** im Befestigungsbereich (11) eine Verbindung zwischen Mantelrohr (3) und Wabenstruktur (2) in axialen und/oder umfänglichen Teilbereichen (21, 22) ausgebildet ist.

8. Wabenkörper (1) nach einem der vorhergehenden Ansprüche, **dadurch gekennzeichnet, dass** zwischen Wabenstruktur (2) und Mantelrohr (3) zumindest in einem Teilbereich eine flexible und/oder elastische Matte (9, 15, 23) ausgebildet ist.

9. Wabenkörper (1) nach einem der vorhergehenden Ansprüche, **dadurch gekennzeichnet, dass** zwischen Wabenstruktur (2) und Mantelrohr (3) zumindest in einem Teilbereich (11, 12, 13) eine Quellmatte, eine keramische Fasermatte und/oder eine Zwischenschicht aus Glimmer ausgebildet ist.

10. Wabenkörper (1) nach einem der vorhergehenden Ansprüche, **dadurch gekennzeichnet, dass** das Mantelrohr (3) im Messfühlerbereich (12) einen zweiten Innendurchmesser (20) aufweist, der größer ist als ein erster Innendurchmesser (19) des Befestigungsbereichs (11).

11. Wabenkörper (1) nach Anspruch 10, **dadurch gekennzeichnet, dass** das Mantelrohr (3) zumindest im Messfühlerbereich (12) zumindest in umfänglichen und/oder axialen Teilbereichen (17) nach außen aufgewölbt ist.

12. Wabenkörper (1) nach einem der vorhergehenden Ansprüche, **dadurch gekennzeichnet, dass** der Messfühlerbereich (12) in einem Abstand (27) von zwischen 20 und 60 mm, bevorzugt zwischen 30 und 50 mm, besonders bevorzugt zwischen 35 und 45 mm hinter einer Stirnseite (5) des Wabenkörpers (1) ausgebildet ist.

13. Verfahren zur Herstellung eines Wabenkörpers umfassend die folgenden Schritte:
a) Bereitstellung einer zumindest teilweise keramische für ein Fluid durchströmbare Wabenstruktur (2) mit mindestens einer Ausnehmung (14) zur Aufnahme eines Messfühlers (8);
b) Bereitstellen eines Mantelrohrs (3) mit mindestens einem Loch (28) zum Durchführen des Messfühlers (8);
c) Einbringen der Wabenstruktur (2) in das Mantelrohr (3) und Verbinden der Wabenstruktur (2) mit dem Mantelrohr (3) in mindestens einem axialen Befestigungsbereich (11),
wobei vor oder während Schritt c) eine Ausrichtung der Wabenstruktur (2) und des Mantelrohrs (3) relativ zueinander erfolgt, so dass das Loch (28) im Mantelrohr (3) und die Ausnehmung (14) in der Wabenstruktur (2) nach Schritt c) einander zumindest teilweise überlappen.

14. Verfahren nach Anspruch 13, bei dem zwischen Wabenstruktur (2) und Mantelrohr (3) eine Zwischenschicht umfassend mindestens eines der folgenden Materialien ausgebildet ist:
- eine Quellmatte,
- eine keramische Fasermatte,
- eine Zwischenschicht aus Glimmer,
- eine poröse metallische Matte;
- eine elastische Matte und
- eine flexible Matte.

15. Verfahren nach Anspruch 14, bei dem die Zwischenschicht räumlich inhomogen ausgebildet ist.

16. Verfahren nach einem der Ansprüche 13 bis 15, bei dem Schritt c) das Zusammenfügen mindestens zweier Mantelrohrteile um die Wabenstruktur (2) umfasst.

17. Verfahren nach einem der Ansprüche 13 bis 15, bei dem in Schritt c)
- die Wabenstruktur (2) mit einer kompressiblen Matte umgeben wird und
- die von der Matte umgebene Wabenstruktur (2) unter Kompression der Matte in das Mantelrohr (3) gedrückt wird.

18. Verfahren nach einem der Ansprüche 13 bis 15, bei dem das Mantelrohr (3) in Schritt c) in mindestens einer Lage um die Wabenstruktur (2) gewickelt wird.

## Claims

1. A honeycomb body (1), in particular for use in the exhaust system of a motor vehicle, comprising an at least partially ceramic honeycomb structure (2), through which a fluid can flow, in a tubular casing (3), the honeycomb structure (2) having cavities (4), **characterized in that** the honeycomb body (1), in a longitudinal direction (10), has at least two axial subregions (11, 12, 13), the honeycomb structure (2) being connected to the tubular casing (3) in at least one axial securing region (11), and at least one axial measurement sensor region (12) being designed with a recess (14) for accommodating at least one measurement sensor (8) in the honeycomb structure (2) and whereby the securing between the tubular casing (3) and the honeycomb structure (2) is designed in such a manner that the holding forces applied to the honeycomb structure (2) in the securing region (11) are bigger than the holding forces applied to the honeycomb structure (2) in the measurement sensor region (12).

2. The honeycomb body (1) as claimed in claim 1, **characterized in that** the honeycomb body (1) comprises an axial sealing region (13), in which a sealing means (9) is formed between honeycomb structure (2) and tubular casing (3).

3. The honeycomb body (1) as claimed in claim 2, **characterized in that** the measurement sensor region (12) is formed between sealing region (13) and securing region (11) in the longitudinal direction (10).

4. The honeycomb body (1) as claimed in claim 2 or 3, **characterized in that** the sealing region (13) is formed in the region of an end side (5, 6) of the honeycomb body (1).

5. The honeycomb body (1) as claimed in claim 4, **characterized in that** the sealing region (13) comprises a blow-out protector (18) in the direction of the end side (5, 6) of the honeycomb body (1).

6. The honeycomb body (1) as claimed in one of the preceding claims, **characterized in that** the connection between honeycomb structure (2) and tubular casing (3) is designed in at least one of the following ways:
a) force-fitting;
b) form-fitting; or
c) materially cohesive.

7. The honeycomb body (1) as claimed in one of the preceding claims, **characterized in that** in the securing region (11) a connection between tubular casing (3) and honeycomb structure (2) is formed in axial and/or circumferential subregions (21, 22).

8. The honeycomb body (1) as claimed in one of the preceding claims, **characterized in that** at least in a subregion a flexible and/or elastic mat (9, 15, 23) is formed between honeycomb structure (2) and tubular casing (3).

9. The honeycomb body (1) as claimed in one of the preceding claims, **characterized in that** at least in a subregion (11, 12, 13) a swellable mat, a ceramic fiber mat and/or an intermediate layer of mica is formed between honeycomb structure (2) and tubular casing (3).

10. The honeycomb body (1) as claimed in one of the preceding claims, **characterized in that** the tubular casing (3), in the measurement sensor region (12), has a second internal diameter (20) which is larger than a first internal diameter (19) of the securing region (11).

11. The honeycomb body (1) as claimed in claim 10, **characterized in that** the tubular casing (3), at least in the measurement sensor region (12), curves convexly outward at least in circumferential and/or axial subregions (17).

12. The honeycomb body (1) as claimed in one of the preceding claims, **characterized in that** the measurement sensor region (12) is formed at a distance (27) of between 20 and 60 mm, preferably between 30 and 50 mm, particularly preferably between 35 and 45 mm, behind an end side (5) of the honeycomb body (1).

13. A process for producing a honeycomb body, comprising the following steps:
a) providing an at least partially ceramic honeycomb structure (2) through which a fluid can flow and which has at least one recess (14) for accommodating a measurement sensor (8);
b) providing a tubular casing (3) having at least one hole (28) for the measurement sensor (8) to pass through;
c) introducing the honeycomb structure (2) into the tubular casing (3) and joining the honeycomb structure (2) to the tubular casing (3) in at least one axial securing region (11),
in which process, before or during step c), the honeycomb structure (2) and the tubular casing (3) are aligned relative to one another, so that the hole (28) in the tubular casing (3) and the recess (14) in the honeycomb structure (2) at least partially overlap one another after step c).

14. The process as claimed in claim 13, in which an intermediate layer is formed between honeycomb structure (2) and tubular casing (3) comprising at least one of the following materials:
- a swellable mat,
- a ceramic fiber mat,
- an intermediate layer of mica,
- a porous metallic mat;
- an elastic mat, and
- a flexible mat.

15. The process as claimed in claim 14, in which the intermediate layer is spatially inhomogenous in form.

16. The process as claimed in one of claims 13 to 15, in which step c) comprises joining together at least two tubular casing parts around the honeycomb structure (2).

17. The process as claimed in one of claims 13 to 15, in which in step c)
- the honeycomb structure (2) is surrounded with a compressible mat, and
- the honeycomb structure (2) surrounded by the mat is pressed into the tubular casing (3), compressing the mat.

18. The process as claimed in one of claims 13 to 15, in which in step c) the tubular casing (3) is wound in at least one layer around the honeycomb structure (2).

## Revendications

1. Corps en nids d'abeilles (1), notamment pour l'utilisation dans le système de gaz d'échappement d'un véhicule automobile, comprenant une structure en nids d'abeilles (2) au moins partiellement céramique et à travers laquelle un fluide peut s'écouler, dans un tube d'enveloppe (3), la structure en nids d'abeilles (2) ayant des cavités (4), **caractérisé en ce que** le corps en nids d'abeilles (1) a dans une direction longitudinale (10) au moins deux régions partielles axiales (11, 12, 13), la structure en nids d'abeilles (2) étant reliée au tube d'enveloppe (3) dans au moins une région de fixation axiale (11), et au moins une région de capteur axiale (12) étant formée avec un dégagement (14) pour recevoir au moins un capteur (8) dans la structure en nids d'abeilles (2) et la liaison entre le tube d'enveloppe (3) et la structure en nids d'abeilles (2) étant réalisée de manière telle que des forces de retenue introduites dans la région de fixation (11) sont plus grandes que des forces de retenue qui sont introduites dans la structure en nids d'abeilles (2) dans la région du capteur (12).

2. Corps en nids d'abeilles (1) selon la revendication 1, **caractérisé en ce que** le corps en nids d'abeilles (1) comprend une région d'étanchement axiale (13), dans laquelle un moyen d'étanchement (9) est réalisé entre la structure en nids d'abeilles (2) et le tube d'enveloppe (3).

3. Corps en nids d'abeilles (1) selon la revendication 2, **caractérisé en ce que** la région de capteur (12) est réalisée en direction longitudinale (10) entre la région d'étanchement (13) et la région de fixation (11).

4. Corps en nids d'abeilles (1) selon la revendication 2 ou 3, **caractérisé en ce que** la région d'étanchement (13) est réalisée dans la région d'une face frontale (5,6) du corps en nids d'abeilles (1).

5. Corps en nids d'abeilles (1) selon la revendication 4, **caractérisé en ce que** la région d'étanchement(13) comprend une protection de soufflage (18) en direction de la face frontale (5,6) du corps en nids d'abeilles (1).

6. Corps en nids d'abeilles (1) selon l'une des revendications précédentes, **caractérisé en ce que** la liaison entre la structure en nids d'abeilles (2) et le tube d'enveloppe (3) est réalisée au moins selon l'une des façons suivantes :
a) par coopération de forces ;
b) par coopération de formes ; ou
c) de façon matériellement jointive.

7. Corps en nids d'abeilles (1) selon l'une des revendications précédentes, **caractérisé en ce que** dans la région de fixation (11) une liaison entre le tube d'enveloppe (3) et la structure en nids d'abeilles (2) est réalisée dans des régions partielles (21, 22) axiales et/ou circonférentielles.

8. Corps en nids d'abeilles (1) selon l'une des revendications précédentes, **caractérisé en ce qu'**au moins dans une région partielle une natte flexible et/ou élastique (9, 15, 23) est formée entre la structure en nids d'abeilles (2) et le tube d'enveloppe (3).

9. Corps en nids d'abeilles (1) selon l'une des revendications précédentes, **caractérisé en ce qu'**une natte gonflante, une natte à fibres céramiques et/ou une couche intermédiaire de mica est réalisée entre la structure en nids d'abeilles (2) et le tube d'enveloppe (3) au moins dans une région partielle (11,12,13).

10. Corps en nids d'abeilles (1) selon l'une des revendications précédentes, **caractérisé en ce que** dans la région de capteur axiale (12) le tube d'enveloppe (3) a un deuxième diamètre intérieur (20) qui est plus grand qu'un premier diamètre intérieur (19) de la région de fixation (11).

11. Corps en nids d'abeilles (1) selon la revendication 10, **caractérisé en ce que** le tube d'enveloppe (3) est bombé vers l'extérieur au moins dans la région du capteur (12), au moins dans des régions partielles circonférentielles et/ou axiales (17).

12. Corps en nids d'abeilles (1) selon l'une des revendications précédentes, **caractérisé en ce que** la région du capteur (12) est réalisée à une distance (27) qui s'étend de 20 à 60 mm, de préférence de 30 à 50 mm, particulièrement préféré de 35 à 45 mm derrière une face frontale (5) du corps en nids d'abeilles (1).

13. Procédé destiné à la fabrication d'un corps en nids d'abeilles comprenant les étapes suivantes :
a) mise à disposition d'une structure en nids d'abeilles (2) au moins partiellement céramique et à travers laquelle un fluide peut s'écouler avec au moins un dégagement (14) pour recevoir un capteur (8) ;
b) mise à disposition d'un tube d'enveloppe (3) avec au moins un trou (28) pour faire passer le capteur (8) ;
c) introduction de la structure en nids d'abeilles (2) dans le tube d'enveloppe (3) et lier la structure en nids d'abeilles (2) au tube d'enveloppe (3) dans au moins une région de fixation axiale (11),
un alignement de la structure en nids d'abeilles (2) et du tube d'enveloppe (3) étant effectué relativement l'un par rapport à l'autre, de sorte que le trou (28) dans le tube d'enveloppe (3) et le dégagement (14) dans la structure en nids d'abeilles (2) se recouvrent au moins partiellement après l'étape c).

14. Procédé selon la revendication 13, dans lequel entre la structure en nids d'abeilles (2) et le tube d'enveloppe (3) une couche intermédiaire est réalisée, comportant au moins un des matériaux suivants :
- une natte gonflante,
- une natte à fibres céramiques ,
- une couche intermédiaire de mica
- une natte métallique poreuse ;
- une natte élastique et
- une natte flexible.

15. Procédé selon la revendication 14, dans lequel la couche intermédiaire est réalisée de manière spatialement inhomogène.

16. Procédé selon l'une des revendications 13 à 15, dans lequel l'étape c) comprend le jointoiement d'au moins deux parties de tube d'enveloppe autour de la structure en nids d'abeilles (2).

17. Procédé selon l'une des revendications 13 à 15, dans lequel dans l'étape c)
- la structure en nids d'abeilles (2) est entourée d'une natte compressible et
- la structure en nids d'abeilles (2) entourée par la natte est poussée sous compression de la natte dans le tube d'enveloppe (3).

18. Procédé selon l'une des revendications 13 à 15, dans lequel dans l'étape c) le tube d'enveloppe (3) est enroulé en au moins une couche autour de la structure en nids d'abeilles (2).
